# EUROPEAN PATENT SPECIFICATION

(11) **EP 4 475 523 B1**
(45) Date of publication and mention of the grant of the patent: **10.12.2025**
(21) Application number: 23177152.8
(22) Date of filing: 05.06.2023
(51) Int. Cl.: H04N 5/33, B60R 11/04, H04N 23/51, H04N 23/55, H04N 23/56, H04N 23/57, H04N 25/21, H04N 23/50, H04N 23/52, G03B 17/02, H04N 23/74, G03B 15/03

(54) **VISION CAMERA FOR A DRIVER MONITORING SYSTEM AND METHOD FOR ASSEMBLING A VISION CAMERA**
SICHTKAMERA FÜR EIN FAHRER-ÜBERWACHUNGSSYSTEM UND VERFAHREN ZUR MONTAGE EINER SICHTKAMERA
CAMÉRA DE VISION POUR SYSTÈME DE SURVEILLANCE D'UN CONDUCTEUR ET PROCÉDÉ D'ASSEMBLAGE D'UNE CAMÉRA DE VISION

(43) Date of publication of application: 11.12.2024
(73) Proprietor: Magna Electronics Sweden AB, 447 37 Vårgårda (SE)
(72) Inventor: URSACHI, Constantin, 700051 Iasi (RO); GIREADA, Alexandru, 700051 Iasi (RO)
(74) Representative: Reichert & Lindner Partnerschaft Patentanwälte

(56) References cited:
- EP-A1- 3 982 197
- US-A1- 2017 264 797

## Description

### FIELD OF THE INVENTION

The invention relates to a vision camera for a driver monitoring system. The vision camera comprises a housing and a cover. The housing carries a lens and a printed circuit board with IR diodes on either side of the lens. A printed circuit board for the camera is positioned in the housing.

Further, the invention relates to a method for assembling a vision camera for a driver monitoring system.

### DESCRIPTION OF THE BACKGROUND ART

The awareness of a driver of a vehicle is monitored by a Driver Monitoring System (DMS) based on a vision camera. According to the prior art, the vision camera is positioned inside the vehicle such that the driver is predictably in the center of the camera's field of view. Illumination is provided by an infrared light (IR) source, with the illumination positioned in the vicinity of the vision camera because the provided natural light is insufficient and the driver is not distracted by the IR illumination. The IR illumination is provided by IR diodes placed on two printed circuit boards (PCB) fixed with screws at a defined angle through a housing.

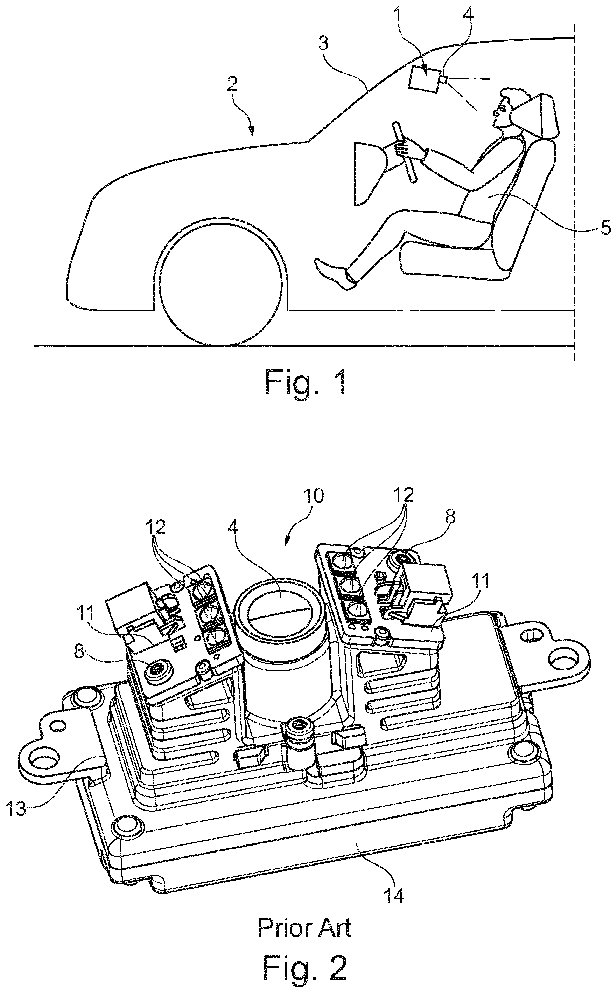

In the current configuration (see Fig. 2), the printed circuit boards are populated with connectors needed to power the IR diodes on the two printed circuit boards. Complicated assembly steps are needed to ensure the assembly of all these components and the electrical connections required for operation of the driver monitoring system. Automatic assembly of the vision camera is difficult to be implemented due to the wire connections between the different printed circuit boards of the housing for the vision camera. EP3982197A1 and US2017/264797A1 describe other driving monitoring systems based on a vision camera and IR illumination.

### SUMMARY OF THE INVENTION

It is an object of the present invention to provide a vision camera for a driver monitoring system which is easy to assemble and whose total number of parts is reduced.

The above object is achieved by a vision camera for a driver monitoring system according to the features of claim 1.

A further object of the present invention is to provide a method for assembling a vision camera for a driver monitoring system, which allows an automatization of the assembly steps and reduces the total number of parts.

The above object is achieved by a method for assembling a vision camera for a driver monitoring system according to the features of claim 12.

In an embodiment of the vision camera for a driver monitoring system according to the invention, the vision camera comprises a housing and a cover. The housing carrying a lens, a printed circuit board with IR diodes on either side of the lens, and a printed circuit board for the camera positioned in the housing.

An embodiment of the vision camera according to the invention comprises a bridge having an opening for the lens and an illumination opening. The illumination openings (e.g., two) are arranged on either side of the opening for the lens. A plurality of electrical connectors are integral parts of the bridge. The electrical connectors electrically contact the printed circuit board with IR diodes and the printed circuit board for the camera once the bridge is mounted to the housing of the vision camera.

This construction has the advantage of allowing automatic assembly of the vision camera and simplifying the overall architecture of the driver monitoring system is. During the assembly of the vision camera, it is ensured that all required electrical connections are established. Furthermore, a certain degree of mechanical protection for the 2-IR diodes is achieved.

According to a further embodiment, inside the housing, an ISP printed circuit board is electrically connected to the printed circuit board for the camera.

According to another embodiment of the invention, each of the plurality of electrical connectors of the bridge is in the form of a hook. A single electrical connector has a first contacting pin at a first free end and a second contacting pin at a second free end.

In an embodiment of the invention, the bridge is made by an injection molding process, and an injection molded plastic material of the bridge incorporates a plurality of at least partially embedded and overmolded electrical connectors. The overmolded electrical connectors are provided at a first end and a second end of the bridge.

In an embodiment of the invention, the first contacting pins of the electrical connectors, embedded in the bridge, electrically contact the printed circuit board with the **IR** diodes. The second contacting pins of the electrical connectors, embedded in the bridge, electrically contact the printed circuit board for the camera.

The advantage of such electrical connectors, embedded in the bridge, is that the electrical contact between the printed circuit board with the **IR** diodes and the printed circuit board for the camera is established during the insertion of the bridge into the housing. This eliminates the need for a screw connection by the housing and for connectors on the printed circuit boards of the vision camera.

According to an embodiment of the housing, an assembly surface for the lens is provided. Two cooling geometries are located laterally the assembly surface for the lens. At least one mounting feature for the bridge is located at or close to each cooling geometry.

With different materials and construction variations of at least the housing, good heat (thermal) management can be achieved.

According to an embodiment of the vision camera, the bridge has formed a plurality of individual and separated legs at a first end and a second end. At least two legs carry embedded and overmolded electrical connectors, or at least two of the embedded and overmolded electrical connectors are part of the individual legs. Each cooling geometry of the housing has formed a plurality of fins thereon. Between each of two successive fins, an individual mounting opening is formed. The mounting openings are arranged to receive the individual legs of the bridge. Each of the individual legs may have a section with a grip and press geometry that cooperates with the mounting opening.

The bridge, which is configured to add two printed circuit boards with **IR** diodes, may have various embodiments with respect to the number of legs with electrical connectors. The individual legs with the electrical connectors may carry injection moulded plastic press-fits (assembly features), which can cooperate with mounting openings of the housing.

According to a further embodiment of the vision camera, the bridge carries a one-piece leg at a first end and at a second end of the bridge. In the one-piece leg, at least two electrical connectors are embedded and overmolded an form an integral part of the one-piece leg. The cooling geometry on the housing has formed a plurality of fins and an elongated mounting opening. The two mounting openings are arranged to receive one of the two one-piece legs of the bridge. Each one-piece leg may have a section with an assembly feature that cooperates with the mounting opening so that the bridge is securely mounted to the housing.

The bridge may be manufactured using a plastic injection molding process. The electrical connectors are initially placed in the mold at locations where the electrical connectors should be present due the various types of the bridge. After the molding process is finished, a bridge may be used to ensure the electrical connection between the printed circuit board with IR diodes and printed circuit board for the camera. At least two electrical connectors are part of each leg of the bridge. The position and number of the electrical connectors in the legs may vary, so that different configurations of the bridge are possible.

Another advantage of the present invention is that the architecture of the vision camera allows modularity of the parts that make up the vision camera. Furthermore, the different versions of the bridges (number of electrical connectors embedded in the bridges) lead to a variation in the position and number of legs that allow the press-fits for mounting the bridges to the housing.

With the present invention it is possible to remove screw connections for assembling the printed circuit boards for the IR diodes and the printed circuit board for the camera on the housing and to eliminate the connectors between the printed circuit boards for the IR diodes and the printed circuit board for the camera. The bridge with the embedded connectors, according to the invention, provides an electrical connection between the printed circuit boards for the IR diodes and the printed circuit board for the camera using the press-fit pins. The bridge results in a subassembly with three printed circuit board which are electrically connected.

A vision camera arrangement for a driver monitoring system comprises a vision camera installation according to any one of the preceding embodiments.

A method for assembling a vision camera for a driver monitoring comprises several steps. In a first step, a printed circuit board with IR diodes is mounted to each illumination opening of a bridge. Preferably, the bridge has two illumination openings on either side of an opening for a lens. An electrical connection to the printed circuit board with IR diodes is established, for example by means of first contacting pins of the electrical connectors, which are an integral part of the bridge. The electric connection is achieved by pressing the printed circuit boards with the IR diodes into the inside of the bridge. This temporarily fixes the printed circuit board with the IR diodes to the bridge.

In the next assembly step, the bridge with the printed circuit board with IR diodes is attached to the housing. The legs of the bridge may have sections with a grip and press geometry for mounting the bridge to the housing. The grip and press geometry of the legs cooperates with at least one respective mounting opening, provided on opposing sides of the housing, respectively, to securely fix the bridge to the housing. Preferably, the at least one mounting opening of the housing matches with the assembly feature or features of the legs.

In a third step, a printed circuit board for the camera is inserted into the housing, thus electrically connecting the printed circuit board to the bridge. For example, the printed circuit board for the camera is pressed against the legs of the bridge, causing second contacting pins to establish the electrical contact and securing the printed circuit board for the camera in the housing.

Next, an optical filter is slid into the housing and fixed with a screw.

Next, an ISP printed circuit board is placed in the housing and electrically connected to the printed circuit board for the camera. A cover is attached to the housing to close the bottom of the housing. For example, the ISP printed circuit board is fixed in the housing by the cover together with four screws (fastening elements) in each corner.

The last assembly step is to assemble the lens into the housing. Final adjustments may be made. After this final assembly step, the assembly of the vison camera is completed.

### BRIEF DESCRIPTION OF THE DRAWINGS

The numerous advantages of the disclosure may be better understood by those skilled in the art by reference to the accompanying figures in which:
**Figure 1** shows an embodiment of an arrangement of a driver monitoring system inside a motor vehicle.
**Figure 2** shows an exemplary prior art design of a vision camera for a driver monitoring system.
**Figure 3** shows an exploded view of one embodiment of the vision camera according to one embodiment.
**Figure 4** shows the assembled vision camera according to the embodiment of Fig. 3.
**Figure 5** shows an exploded view of the vision camera according to a further embodiment.
**Figure 6** shows the assembled vision camera according to the embodiment shown in Fig. 5.
**Figure 7A** and **7B** show two different perspective views of a bridge according to one embodiment.
**Figure 8A to 8C** show the installation process of the printed circuit boards to the bridge as shown in Fig. 7A and 7B.
**Figure 9A to 9C** show perspective views of various embodiments of the electrical contacting of the printed circuit boards for the IR diodes.
**Figure 10A to 10E** show an embodiment of the bridge with detailed views of various construction elements of the bridge.
**Figure 11A** and **11B** show various embodiments of the printed circuit boards for IR diodes.
**Figure 12** shows a perspective view of the housing for the camera of Fig. 4 with detailed views of specific housing features.
**Figure 13A** to **13F** show the mounting sequence of the bridge together with other components of the camera as shown in Fig. 3.
**Figure 14A** and **14B** show two different perspective views of a bridge according to a further embodiment.
**Figure 15** shows an embodiment of the printed circuit board for IR diodes used in conjunction with the bridge of Fig. 14.
**Figure 16A** and **16B** show the installation process of printed circuit boards to the bridge as shown in Fig. 14A and 14B.
**Figure 17A** and **17C** show various embodiments of the printed circuit boards for IR diodes.
**Figures 18A to D** show the bridge of Fig. 14 with detailed views of various construction elements of the bridge.
**Figure 19** is a perspective view of the housing for the camera of Fig. 6 with detailed views of specific housing features.
**Figure 20A** to **20F** show the mounting sequence of the further embodiment of bridge together with other components of the camera as shown in Fig. 5.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

**Figure 1** shows an embodiment of an arrangement of a driver monitoring system **1** (DMS) inside a motor vehicle **2**. The driver monitoring system **1** is mounted on or in the vicinity of a windshield **3** of motor vehicle **2,** so that at least one vision device of the driver monitoring system **1** is directed towards a driver **5** of the motor vehicle **2.** In particular, a lens **4** of the vision device, which is for example a vision camera, is directed towards driver **5.**

**Figure 2** shows an exemplary prior art design of a vision camera **10** for a driver monitoring system **1** (see Fig. 1). Vision camera **10** is positioned inside vehicle **2** such that driver **5** is predictably located in the center of vison camera's **10** field of view (not shown here). A housing **13** of vison camera **10** carries two printed circuit boards **11,** each of which is equipped with IR diodes **12** for illumination. The IR diodes **12,** which provide a source of infrared (IR) light, are positioned in the vicinity a lens 4 of vision camera **10.** A cover **14** closes housing **13.** The printed circuit boards **11** with the IR diodes **12** are positioned at an angle defined by housing **13** and secured to housing **13** by screws **8.**

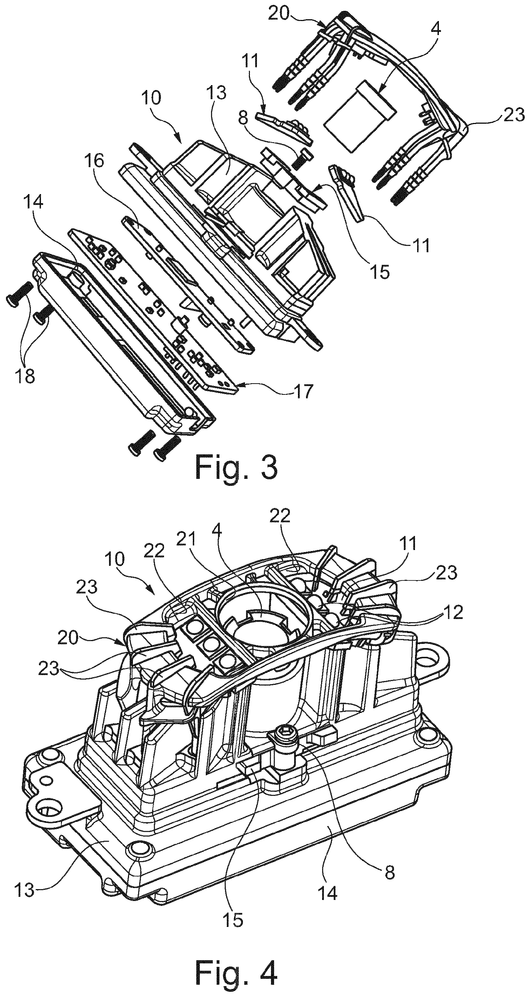

**Figure 3** shows an exploded view according to one embodiment of the vision camera **10.** Housing **13** is the basic carrier for the features of vision camera **10.** The printed circuit boards **11** with the IR diodes **12** are attached to a bridge **20** and rest against housing **13** once bridge **20** is attached to housing **13.** In addition, a lens **4** is inserted into housing **13.** Opposite bridge **20,** a printed circuit board **16** for the vision camera **10** and a printed circuit board **17** for in-system programming (ISP) are positioned in housing **13.** An optical filter **15** is positioned between lens **4** and housing **13** and is fixed with a screw **8.** Housing **13** is closed by a cover **14.** Cover **14** is fixed to housing **13** by fasteners **18.** The fasteners **18** may be screws.

**Figure 4** shows the assembled vision camera **10** according to the embodiment shown in Fig. 3. To avoid repetition and avoid unnecessarily lengthening the description, emphasis is placed on the embodiment of bridge **20** that cooperates with housing **13** to provide a functional embodiment of vison camera **10.** A plurality of electrical connectors **23** are an integral part of bridge **20.** The electrical connectors **23** provide electric power to the printed circuit boards **11** for the IR diodes **12** located behind respective illumination openings **22** of bridge **20.** In addition, the electrical connectors **23** supply electric power to camera printed circuit board **16** (see Fig. 3), which is in housing **13.** Lens **4** is located behind an opening **21** of bridge **20.**

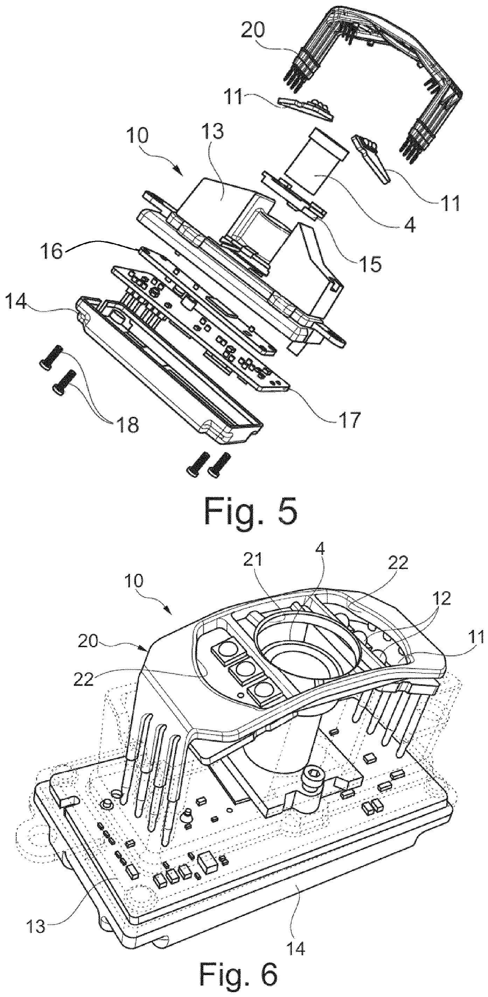

**Figure 5** shows an exploded view of the vision camera **10** according to a further embodiment. The embodiment shown here differs from the embodiment in Fig. 3 in that a further embodiment of the bridge **20** is used to assemble vision camera 10. All other features are known from the exploded view of Fig. 3.

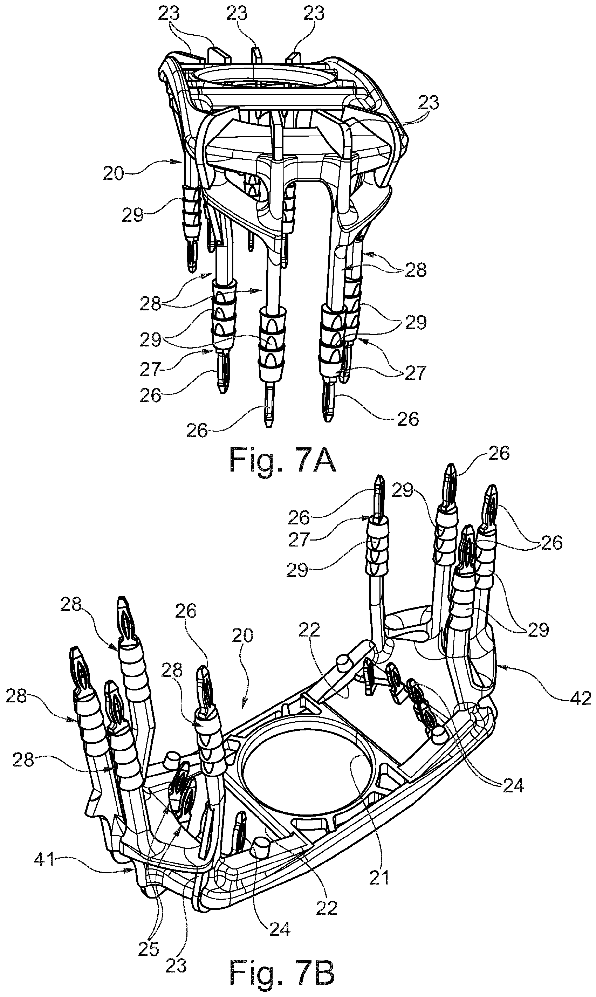

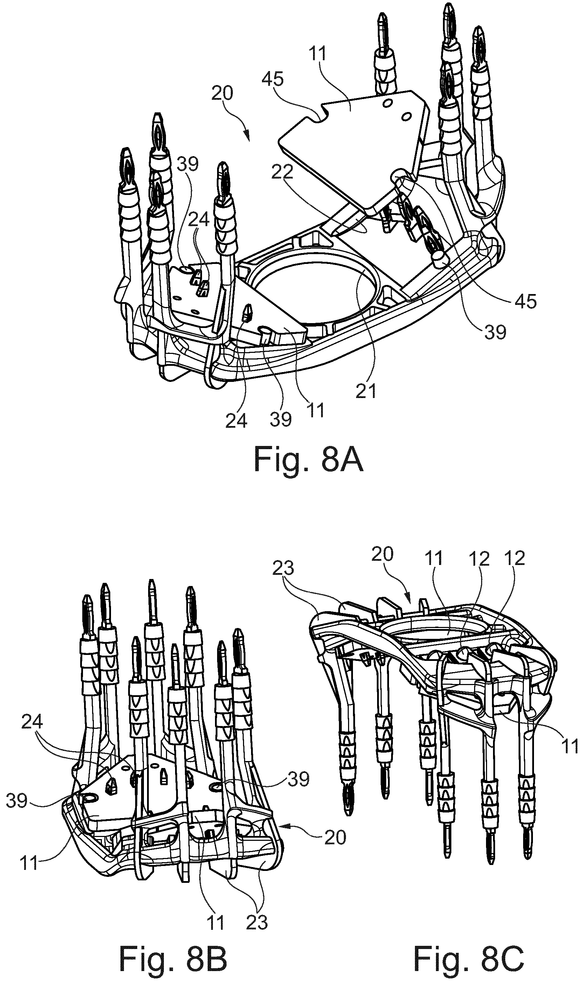

**Figure 6** shows the assembled vision camera **10** according to the exploded view of the embodiment shown in Fig. 5. Openings **22** are formed in bridge **20** for the printed circuit boards **11** for the IR diodes **12.** The printed circuit boards **11** are located behind the respective illumination openings **22** of bridge **20.** Lens **4** is located behind an opening **21** of bridge **20.** Once bridge **20** is mounted to housing **13,** an electric connection is established between the camera printed circuit board **16** (see Fig. 3) and the printed circuit boards **11** for the IR diodes **12** by means of fully embedded electrical connectors **23** (see Figs. 7A+B, 8A-C,).

**Figure 7A** and **7B** show two different perspective views of a bridge **20** according to one embodiment used for assembling a vision camera **10** as shown in Fig. 4. The electrical connectors **23** are partially embedded and overmolded with the material, forming the bridge **20,** which is manufactured by injection molding a plastic material. The electrical connectors **23** are an integral part of bridge **20.** The embedded and overmolded electrical connectors **23** form individual legs **28,** each of which having a section **29** with a grip and press geometry that provide an assembly feature to housing **13.** The electrical connectors **23** are arranged at a first end **41** and at a second end **42** of bridge **20.** Each electrical connector **23** has a first contacting pin **24** formed at a first free end **25** and a second contacting pin **26** formed at a second free end **27.** The first contacting pins **24** reach into the illumination openings **22** arranged on either side of opening **21** for lens **4.**

**Figure 8A to 8C** show the installation process of the printed circuit boards **11** for IR diodes **12** to the bridge **20,** as shown in Figs. 7A and 7B. A pair of locating pins **39** are formed near each illumination opening **22.** The locating pins **39** are made of the same plastic material as the injection molded part of the bridge **20.** Each printed circuit board **11** for IR diodes **12** is placed in relation to the illumination openings **22** of bridge **20,** and at least the pair of locating pins **39** provide a press fit for the printed circuit boards **11** for IR diodes **12** and hold the printed circuit boards **11** for IR diodes **12** in place. The locating pins **39** ensure that the first contacting pins **24** reach into corresponding receptacles (not shown), wherein each recess **45** of the printed circuit boards **11** for IR diodes **12** takes-up the corresponding locating pin **39.** In the embodiment shown here, bridge **20** has four legs **28** at the first end **41** and four other legs **28** at the second end **42** of bridge **20.** It is obvious to a person skilled in the art that the number of legs **28** having electrical connectors **23** should not be considered a limitation of the invention. For the sake of description, four electrical connectors **23** are provided here.

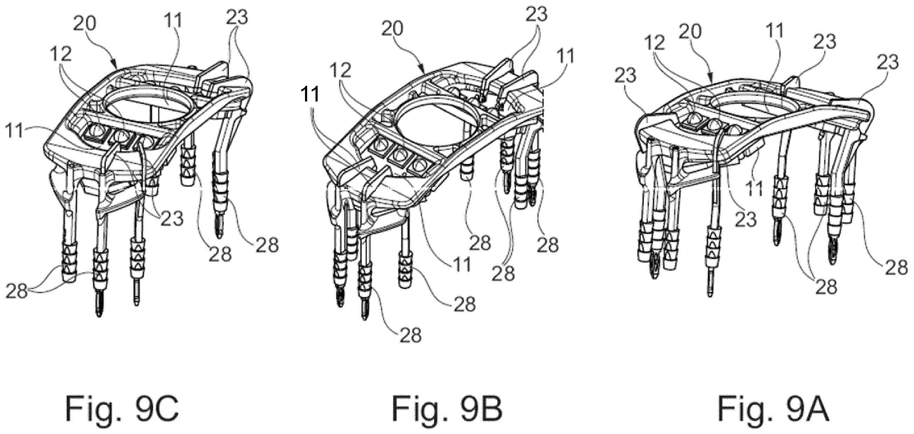

**Figure 9A** to **9C** show perspective views of various embodiments of the electrical contacting of the printed circuit boards **11** for the IR diodes **12.** Two printed circuit boards **11** for the IR diodes **12** are connected to the bridge **20.** The embodiments shown here do not have an overmolded electrical connector **23** in each leg **28.** The various arrangements of the electrical connectors **23** provide different contacting capabilities for the printed circuit boards **11** attached to bridge **20.**

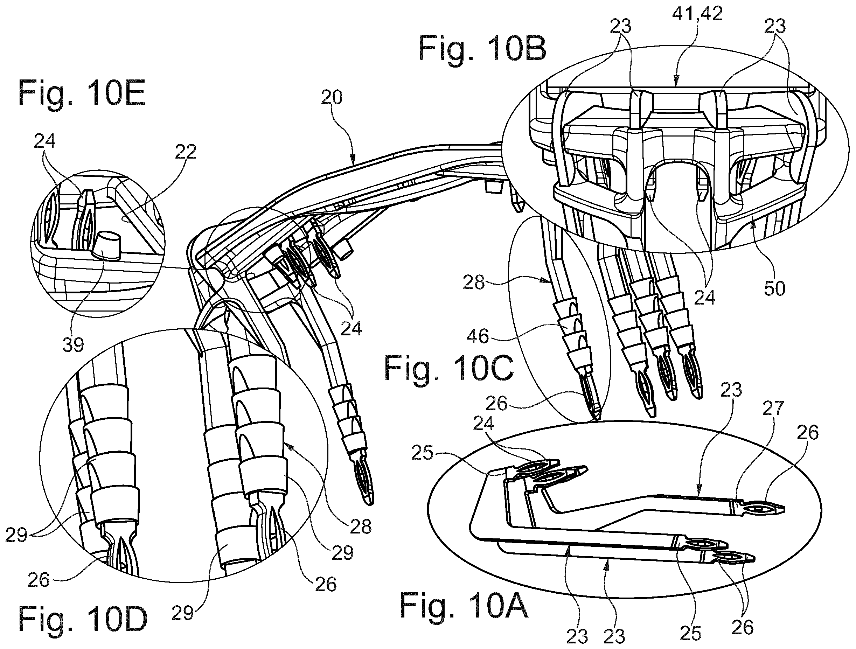

**Figure 10A** to **10E** show an embodiment of the bridge **20** with detailed views of various construction elements of bridge **20.** The electrical connectors **23** shown in Fig. 10A, which are used in the embodiment of the bridge **20,** have the form of a hook. Each electrical connector **23** has a first contacting pin **24** at a first free end **25** and a second contacting pin **26** at a second free end **27.** The electrical connectors **23** are stamped from a sheet material and placed into the mold for overmolding in a press-fit manner.

The first end **41** or the second end **42** of bridge **20** is shown in Fig. 10B. The electrical connectors **23** form an integral part of bridge **20,** but are not completely overmolded by a plastic material **50.** The overmolding step does not cover the first contacting pins **24** at the first free end **25** and the second contacting pins **26** at second free end **27** of electrical connector **23** (see Figs. 10B and 10C).

Fig. 10D shows that the individual legs **28** carry an overmolded section **29.** Section **29,** if an electrical connector **23** is present, is formed around electrical connector **23** and is a grip with a press geometry. Leg **28** has section **29** formed even if an electrical connector **23** is not present at a specific position. Section **29** having an assembly feature **46** in the form of the grip with the press geometry is necessary for assembling bridge **20** to housing **13.**

The printed circuit boards **11** with the IR diodes **12** are mounted to bridge **20** at a location of the illumination openings **22** of bridge **20** (see Fig. 10E). The locating pin **39** (see Fig. 8A, the pair of locating pins **39**) assist in aligning and assembling printed circuit board **11** with IR diodes **12** to the illumination openings **22** of bridge **20.**

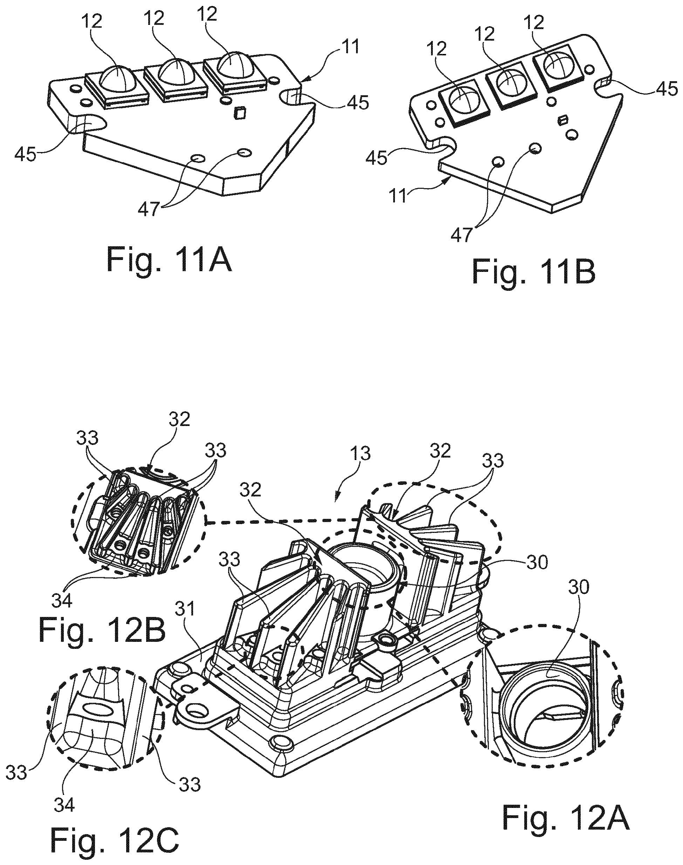

**Figure 11A** and **11B** show various embodiments of the printed circuit boards **11** for IR diodes **12.** The printed circuit boards **11** need to be adapted by means of appropriate holes or recesses **45** for press fits, and the position and number of pins may be customized according to requirements.

The printed circuit boards **11** for IR diodes **12** have recesses **45** formed which facilitate positioning of the printed circuit board **11** at the defined position of bridge **20.** When positioning the printed circuit board **11,** the first contacting pins **24** (see Fig. 8A) reach through passages **47** formed in the printed circuit board **11.** At least two passages **47** are formed in the printed circuit board **11.** The number of passages **47** depends on the number of electrical connectors **23** that are part of bridge **20.**

**Figure 12** is a perspective view of the housing **13** for the camera **10** of Fig. 4 with detailed views (Figs. 12A to 12C) of specific housing features. Preferably, the housing **13** is suitable for aluminum die casting technology. An assembly surface **30** for lens **4** (not shown) is placed on a base **31** of housing **13** and between cooling geometries **32** of housing **13** and has a rounded shape (see Fig. 12A). Each cooling geometry **32** has a plurality of fins **33** arranged in a fan shape and open to one side of each cooling geometry **32** (see also Fig. 12B). An individual mounting opening **34** is formed between two fins **33** (see Fig. 12C). The individual mounting openings **34** are arranged on each cooling geometry **32** such that they receive the individual legs **28** of the embodiment of bridge **20** as shown in Figs. 7A to 7B. With the cooling geometries **32,** the plurality of fins **33** and the mounting openings **34,** geometries for cooling and thermal paste dispensing are formed.

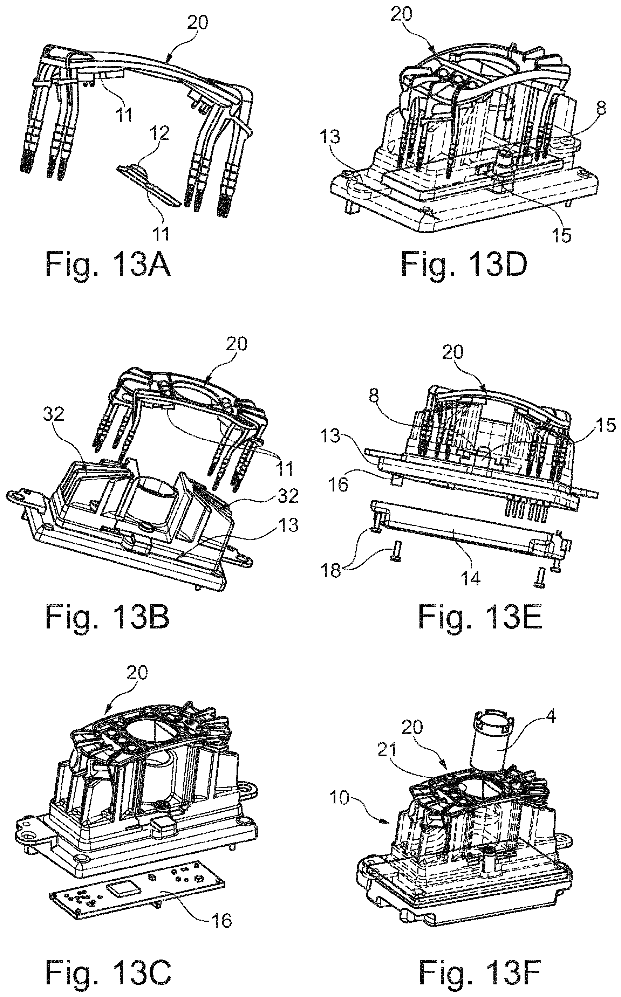

**Figures 13A** to **13F** show the mounting sequence of a bridge **20** together with other components of the vision camera **10** as shown in Fig. 3. In an initial step (see Fig. 13A), the printed circuit boards **11** with IR diodes **12** are mounted to each illumination opening **22** (see Figs. 8A to 8C) of a bridge **20.** In this process, the printed circuit boards **11** with IR diodes **12** are electrically connected by the bridge **20.** The circuit boards **11** are temporarily fixed to bridge **20** until the next step. In the next step (see Fig. 13B), bridge **20** is assembled to housing **13** together with the printed circuit boards **11.** Section **29** (see Figs. 7A and 7B), with a grip and press geometry of the individual legs **28,** provides an assembly feature on the housing **13** that holds bridge **20** in contact with the housing **13.** The contact (see Fig. 13C) between the housing **13** and the printed circuit boards **11,** which are located at the bridge **20,** is established by pressing bridge **20** with printed circuit boards **11** against the cooling geometry **32.** In addition, the printed circuit board **16** for the camera **10** is also brought into electrical contact with the second contacting pins **26** (see Figs. 7A und 7B) of bridge **20.** The cooling geometry **32** of housing **13** matches the bridge **20.** Next, as shown in Fig. 13D, the optical filter **15** is slid into housing **13** and secured with a screw **8.** Furthermore, ISP printed circuit board **17** is inserted into housing **13.** Cover **14** is fixed to housing **13** together with four fasteners **18.** The fasteners **18** are, for example, screws placed at each corner of cover **14.** The final assembly step is to assemble lens **4** through opening **21** for lens **4** in bridge **20.** After this final step, the assembly of vision camera **10** is complete.

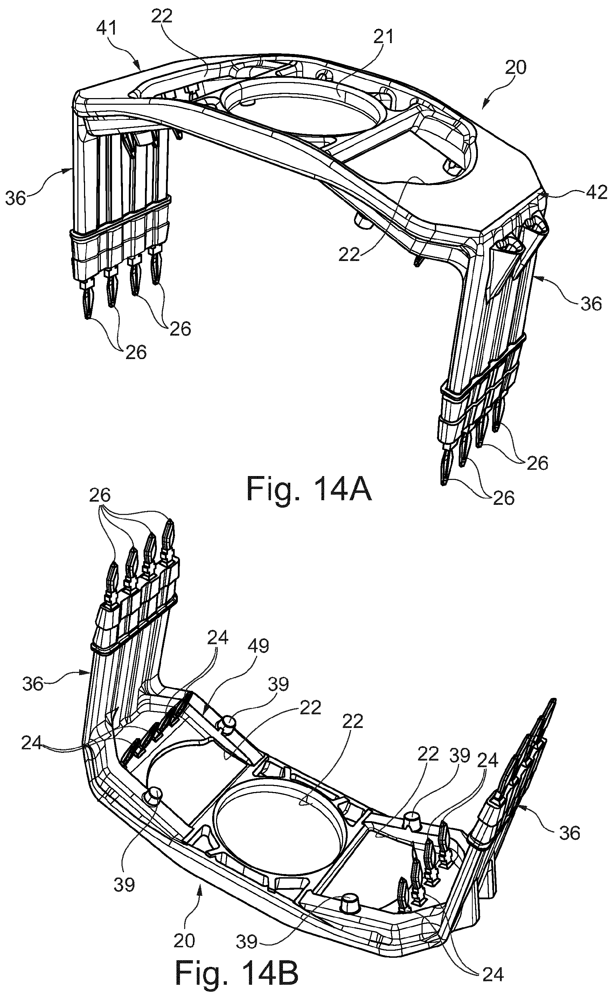

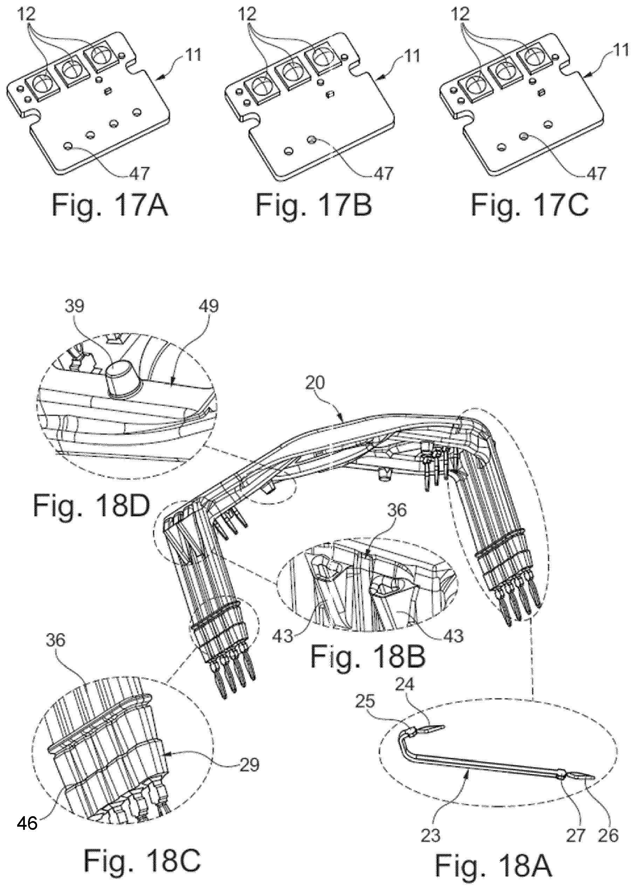

**Figure 14A** and **14B** show two different perspective views of a bridge **20** according to another embodiment of a vision camera **10.** As shown in Fig. 6, bridge **20** is mounted to housing **13** of vision camera **10.** Bridge **20** carries a one-piece leg **36** at the first end **41** and an opposite one-piece leg **36** at the second end **42.** Bridge **20** is formed by an injection molding process, and the electrical connectors **23** (see Fig. 18A) are completely embedded in the one-piece legs **36** of bridge **20** made of a plastic material. However, the injection molding process is such that the first contacting pins **24** and the second contacting pins **26** of the electrical connectors **23** are not covered by the plastic material of bridge **20.** The contacting pins **24** reach out to an inside **49** of bridge **20.** In addition, the locating pins **39** are formed on the inside **49** of bridge **20.** Each one-piece leg **36,** in the embodiment shown here, has four electrical connectors **23** being part of the one-piece leg **36.** As already mentioned in the description of bridge **20** in Figs. 7A and 7B, the embodiment shown in Figs. 14A and 14B also has an opening **21** for lens **4** and an illumination opening **22** on both sides of the opening **21** for lens **4.**

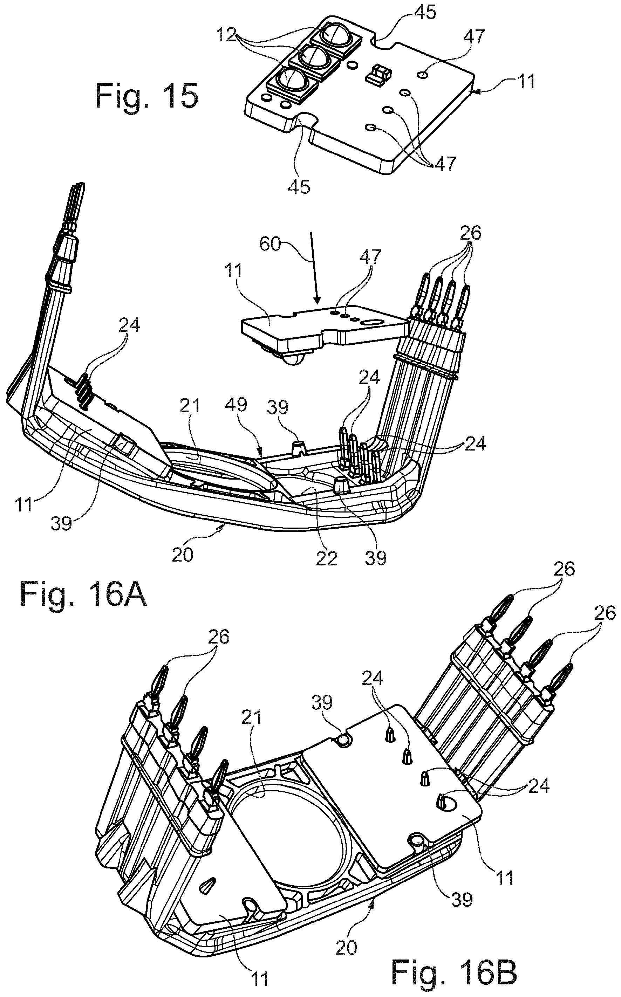

**Figure 15** shows an embodiment of the printed circuit board **11** for IR diodes **12** in conjunction with bridge **20** of Figs. 14A and 14B. Printed circuit board **11** has formed four passages **47** which can receive the second contacting pins **26** once the printed circuit board **11** is positioned in bridge **20.**

**Figure 16A** and **16B** show the installation process of printed circuit board **11** to the bridge **20** as shown in Figs. 14A and 14B. Printed circuit board **11** is lowered along an arrow **60** to the inside **49** toward the illumination opening **22** until printed circuit board **11** covers illumination opening **22** and is then correctly positioned by means of the locating pins **39** and the first contacting pins **24** reach through the passages **47** of printed circuit board **11.**

**Figure 17A** and **17C** show various embodiments of the printed circuit boards **11** for the IR diodes **12.** The embodiments differ by the number of passages **47** for the first contacting pins **24.** In Fig. 17A, the corresponding printed circuit board **11** has four passages **47,** meaning that the one-piece leg **36** has integrated four electrical connectors **23** and, consequently, four first contacting pins **24** (see, for example, the embodiment of Figs. 16A and 16B). In Fig. 17B, the corresponding printed circuit board **11** has two passages **47,** which means that the one-piece leg **36** has integrated two electrical connectors **23** and, consequently, two first contacting pins **24.** In Fig. 17C, the corresponding printed circuit board **11** has three passages **47,** which means that the one-piece leg **36** has integrated two electrical connectors **23** and, consequently, three first contacting pins **24.** The different embodiments of the printed circuit boards **11** depend on the particular application.

**Figures 18A to 18D** show bridge **20** of Fig. 14 with detailed views of various structural elements of bridge **20.** Electrical connector **23,** which is part of bridge **20,** is shown in Fig. 18A. Electrical connector **23** is also in the form of a hook. For example and as shown in Fig. 18A, electrical connector **23** is designed as a press-fit electrical connector having two bends initially placed in the mold (not shown). Each electrical connector **23** has a first contacting pin **24** at a first free end **25** and a second contacting pin **26** at a second free end **27.** The electrical connectors **23** are placed in the mold for overmolding in a press-fit manner to form the bridge **20** with the one-piece legs **36.** Fig. 18B shows a geometry **43,** which is attached to each one-piece leg **36.** Geometry **43** is used to mount bridge **20** with the attached printed circuit boards **11** (see Fig. 16B) to housing **13.** Each one-piece leg **36** has an assembly feature **45** in a section **29** that is used to mount bridge **20** to housing **13** (see Fig. 18C). Preferably, geometry **43** is a grip and press geometry as previously described, i.e., which cooperates with mounting opening **34** to mount bridge **20** to housing **13.** Fig. 18D shows a section through the inside **49** of bridge **20.** The locating pin **39** on the inside **49** is used to position printed circuit board **11** (see Fig. 16B).

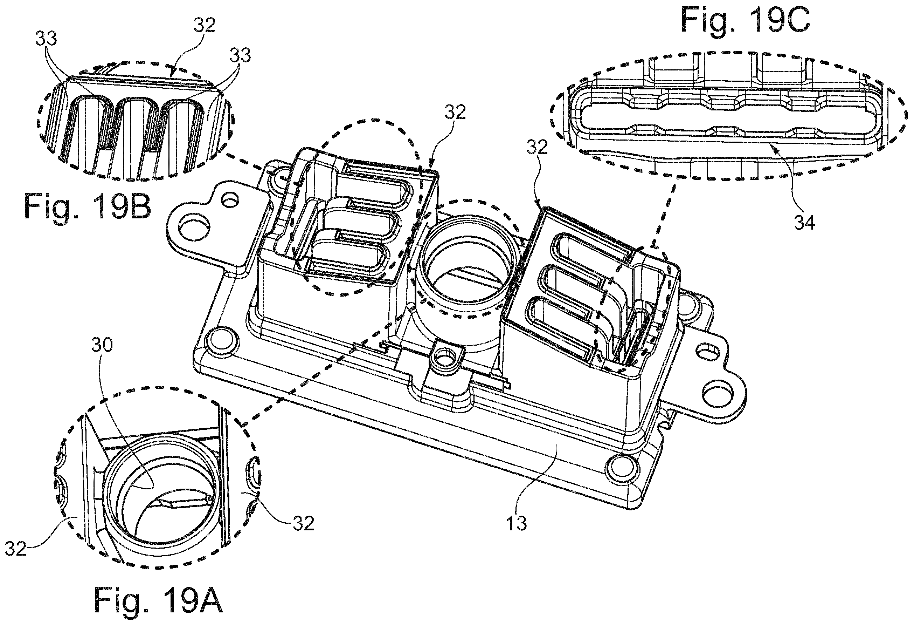

**Figure 19** is a perspective view of the housing **13** for camera **10** of Fig. 6 with detailed views (Figs. 19A to 19C) of specific housing features. Preferably, housing **13** is suitable for aluminum die casting technology. An assembly surface **30** for lens **4** (not shown), which has a rounded shape (see Fig. 19A), is placed between cooling geometries **32** of housing **13.** Each cooling geometry **32** has a plurality of parallel fins **33,** which are open to one side of each cooling geometry **32.** Following the parallel fins **33,** a mounting opening **34** (see Fig. 19C) with an elongated shape is formed in housing **13.** The mounting opening **34** of housing **13** cooperates with assembly feature **45** in section **29** of the one-piece leg **36** of bridge **20.** The two mounting openings **34** each receive the one-piece leg **36** of bridge **20** to mount bridge **20** to housing **13.** With the cooling geometries **32,** the plurality of fins **33** and the mounting openings **34,** geometries for cooling and thermal paste dispensing are formed.

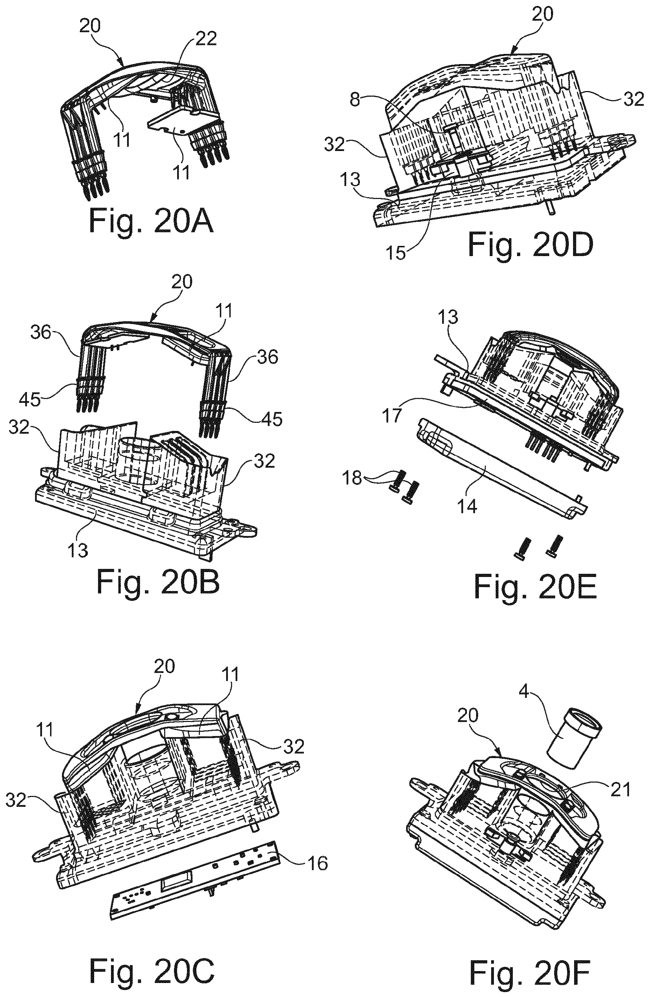

**Figure 20A** to **20F** show the mounting sequence of bridge **20** together with other components of vision camera **10** as shown in Fig. 5. In an initial step (see Fig. 20A), the printed circuit boards **11** with IR diodes **12** are mounted to each illumination opening **22** of a bridge **20** (see Figs. 16A to 16b). In this process, the printed circuit boards **11** with IR diodes **12** are electrically connected by bridge **20.** The circuit boards **11** are temporarily fixed to bridge **20** until the next step. In the next step (see Fig. 20B), bridge **20** is inserted into the cooling geometries **32** of housing **13** together with the printed circuit boards **11.** Section **29** (see Fig. 18C) with assembly feature **45** of one-piece leg **36** is mounted to the housing **13** and holds bridge **20** in contact with housing **13.** The contact (see Fig. 20C) between the cooling geometries **32** of housing **13** and the printed circuit boards **11,** which are located on bridge **20,** is established by pressing the bridge **20** with printed circuit boards **11** against the cooling geometry **32.** Also, the printed circuit board **16** for the camera **10** is brought in electrical contact with the second contacting pins **26** (see Figs. 16A und 16B) of bridge **20.** Next, as shown in Fig. 20D, the optical filter **15** is slid into the housing **13** and secured with a screw **8.** Further, the ISP printed circuit board **17** is placed in housing **13.** Cover **14** is attached to housing **13** together with four fasteners **18.** Fasteners **18** are, for example, screws placed at each corner of cover **14.** The final assembly step is to assemble lens **4** through opening **21** for lens **4** in the bridge **20.** After this final step, the assembly of vision camera **10** is completed.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: driver monitoring system
- 2: motor vehicle
- 3: windshield
- 4: lens
- 5: driver
- 8: screw
- 10: camera
- 11: printed circuit board
- 12: IR diode
- 13: housing
- 14: cover
- 15: filter
- 16: printed circuit board for the camera
- 17: ISP printed circuit board
- 18: fastener
- 20: bridge
- 21: opening for lens
- 22: illumination opening
- 23: electrical connector
- 24: first contacting pin
- 25: first free end
- 26: second contacting pin
- 27: second free end
- 28: leg
- 29: section
- 30: assembly surface
- 31: base
- 32: cooling geometry
- 33: fin
- 34: mounting opening
- 36: one-piece leg
- 39: locating pin
- 41: first end
- 42: second end
- 43: geometry
- 45: recess
- 46: assembly feature
- 47: passage
- 49: inside
- 50: plastic material
- 60: arrow

## Claims

1. A vision camera (10) for a driver monitoring system (1), comprising
a housing (13), and
a cover (14),
the housing (13) carrying a lens (4), a printed circuit board (11) with IR diodes (12) on either side of the lens (4), and a printed circuit board (16) for the camera (10) positioned in the housing (13),
**characterized by**
a bridge (20) having an opening (21) for the lens (4) and an illumination opening (22) on either side of the opening (21) for the lens (4); and
a plurality of electrical connectors (23) that are an integral part of the bridge (20) and electrically contact the printed circuit board (11) with IR diodes (12) and the printed circuit board (16) for the camera (10) once the bridge (20) is mounted to the housing (13).

2. The vision camera (10) as claimed in claim 1, wherein inside the housing (13), an ISP printed circuit board (17) is electrically connected to the printed circuit board (16) for the camera (10).

3. The vision camera (10) as claimed in any one of the preceding claims, wherein each of the plurality electrical connectors (23) of the bridge (20) is in the form of a hook having a first contacting pin (24) at a first free end (25) and a second contacting pin (26) at a second free end (27).

4. The vision camera (10) as claimed in claim 3, wherein the bridge (20) comprises an injection molded plastic material having a plurality of at least partially embedded and overmolded electrical connectors (23) provided at a first end (41) and a second end (42) of the bridge (20).

5. The vision camera (10) as claimed in claim 4, wherein the first contacting pins (24) of the electrical connectors (23), embedded in the bridge (20), electrically contact the printed circuit board (11) with the IR diodes (12), and the second contacting pins (26) of the electrical connectors (23), embedded in the bridge (20), electrically contact the printed circuit board (16) for the camera (10).

6. The vision camera (10) as claimed in any one of the preceding claims, wherein the housing (13) has formed an assembly surface (30) for the lens (4), two cooling geometries (32) located laterally the assembly surface (30) and at least one mounting feature (34) for the bridge (20) located at each cooling geometry (32).

7. The vision camera (10) as claimed in any one of the preceding claims, wherein individual legs (28) are formed at a first end (41) and a second end (42) of the bridge (20), wherein at least two of the embedded and overmolded electrical connectors (23) are part of the individual legs (28), and each cooling geometry (32) has formed a plurality of fins (33) thereon, wherein an individual mounting opening (34) is formed between each of two successive fins (33) arranged to receive the individual legs (28) of the bridge (20).

8. The vision camera (10) as claimed in claim 7, wherein each of the individual legs (28) comprises a section (29) with a grip and press geometry that cooperates with the mounting opening (34).

9. The vision camera (10) as claimed in any one of claims 1 to 6, wherein at a first end (41) and a second end (42) of the bridge (20), the at least two embedded and overmolded electrical connectors (23) together form a one-piece leg (36), and each cooling geometry (32) has formed a plurality of fins (33) and an elongated mounting opening (38), which is arranged to receive the one-piece leg (36) of the bridge (20).

10. The vision camera (10) as claimed in claim 9, wherein each one-piece leg (36) has a section (29) with an assembly feature (45) cooperating with the mounting opening (38).

11. A vision camera arrangement for a driver monitoring system (1) comprising a vision camera (10) according to any one of the preceding claims.

12. A method for assembling a vision camera (10) for a driver monitoring system comprising the steps of:
mounting a printed circuit board (11) with IR diodes (12) to each illumination opening (22) of a bridge (20) and electrically connecting the printed circuit board (11) with IR diodes (12),
attaching the bridge (20) with the printed circuit board (11) with IR diodes (12) to the housing (13);
inserting a printed circuit board (16) for the camera (10) into the housing (13) and electrically connecting the printed circuit board (16) to the bridge (20);
sliding an optical filter (9) into the housing (13) and securing the optical filter (9) in the housing (13);
placing an ISP printed circuit board (17) in the housing and electrically connecting it to the printed circuit board (16) for the camera (10), and attaching a cover (14) to the housing (13); and
assembling a lens (4) into the housing (13).

13. The method as claimed in claim 12, wherein the electric connection of the printed circuit board (11) with IR diodes (12) is established by means of first contacting pins (24).

14. The method as claimed in claim 12, wherein the electric connection of the printed circuit board (16) for the camera (10) is established by means of second contacting pins (26).

15. The method as claimed in any one of claims 12 to 14, wherein the bridge (20) comprises sections (29) having a grip and press geometry for mounting the bridge (20) to the housing (13).

## Patentansprüche

1. Eine Sichtkamera (10) für ein Fahrerüberwachungssystem (1), mit ein Gehäuse (13), und
eine Abdeckung (14),
wobei das Gehäuse (13) eine Linse (4), eine gedruckte Schaltungsplatte (11) mit IR-Dioden (12) auf beiden Seiten der Linse (4) und eine gedruckte Schaltungsplatte (16) für die Kamera (10) trägt, die in dem Gehäuse (13) angeordnet ist,
**gekennzeichnet durch**
eine Brücke (20) mit einer Öffnung (21) für die Linse (4) und einer Beleuchtungsöffnung (22) auf beiden Seiten der Öffnung (21) für die Linse (4); und
eine Vielzahl von elektrischen Verbindern (23), die ein integraler Bestandteil der Brücke (20) sind und die gedruckte Schaltungsplatte (11) mit IR-Dioden (12) und die gedruckte Schaltungsplatte (16) für die Kamera (10) elektrisch kontaktieren, sobald die Brücke (20) an dem Gehäuse (13) montiert ist.

2. Die Sichtkamera (10) nach Anspruch 1, wobei innerhalb des Gehäuses (13) eine ISP-Leiterplatte (17) mit der gedruckten Schaltungsplatte (16) für die Kamera (10) elektrisch verbunden ist.

3. Die Sichtkamera (10) nach einem der vorhergehenden Ansprüche, wobei jeder der Vielzahl von elektrischen Verbindern (23) der Brücke (20) die Form eines Hakens mit einem ersten Kontaktierungsstift (24) an einem ersten freien Ende (25) und einem zweiten Kontaktierungsstift (26) an einem zweiten freien Ende (27) aufweist.

4. Die Sichtkamera (10) nach Anspruch 3, wobei die Brücke (20) ein spritzgegossenes Kunststoffmaterial mit einer Vielzahl von zumindest teilweise eingebetteten und umspritzten elektrischen Verbindern (23) umfasst, die an einem ersten Ende (41) und einem zweiten Ende (42) der Brücke (20) vorgesehen sind.

5. Die Sichtkamera (10) nach Anspruch 4, wobei die ersten Kontaktierungsstifte (24) der in der Brücke (20) eingebetteten elektrischen Verbinder (23) die gedruckte Schaltungsplatte (11) mit den IR-Dioden (12) elektrisch kontaktieren, und die zweiten Kontaktierungsstifte (26) der in der Brücke (20) eingebetteten elektrischen Verbinder (23) die gedruckte Schaltungsplatte (16) für die Kamera (10) elektrisch kontaktieren.

6. Die Sichtkamera (10) nach einem der vorhergehenden Ansprüche, wobei das Gehäuse (13) eine Montagefläche (30) für die Linse (4), zwei seitlich der Montagefläche (30) angeordnete Kühlgeometrien (32) und mindestens ein an jeder Kühlgeometrie (32) angeordnetes Montageelement (34) für die Brücke (20) aufweist.

7. Die Sichtkamera (10) nach einem der vorhergehenden Ansprüche, wobei einzelne Schenkel (28) an einem ersten Ende (41) und einem zweiten Ende (42) der Brücke (20) ausgebildet sind, wobei mindestens zwei der eingebetteten und umspritzten elektrischen Verbinder (23) Teil der einzelnen Schenkel (28) sind, und jede Kühlgeometrie (32) eine Vielzahl von Rippen (33) darauf ausgebildet hat, wobei eine einzelne Montageöffnung (34) zwischen jeder von zwei aufeinanderfolgenden Rippen (33) ausgebildet ist, die angeordnet ist, um die einzelnen Schenkel (28) der Brücke (20) aufzunehmen.

8. Die Sichtkamera (10) nach Anspruch 7, wobei jeder der einzelnen Schenkel (28) einen Abschnitt (29) mit einer Greif- und Druckgeometrie aufweist, der mit der Montageöffnung (34) zusammenwirkt.

9. Die Sichtkamera (10) nach einem der Ansprüche 1 bis 6, wobei an einem ersten Ende (41) und einem zweiten Ende (42) der Brücke (20) die mindestens zwei eingebetteten und umspritzten elektrischen Verbinder (23) zusammen einen einteiligen Schenkel (36) bilden, und jede Kühlgeometrie (32) eine Vielzahl von Rippen (33) und eine längliche Montageöffnung (38) ausgebildet hat, die zur Aufnahme des einteiligen Schenkels (36) der Brücke (20) angeordnet ist.

10. Die Sichtkamera (10) nach Anspruch 9, wobei jeder einteilige Schenkel (36) einen Abschnitt (29) mit einem Montagemerkmal (45) aufweist, das mit der Montageöffnung (38) zusammenwirkt.

11. Eine Sichtkameraanordnung für ein Fahrerüberwachungssystem (1) mit einer Sichtkamera (10) nach einem der vorhergehenden Ansprüche.

12. Ein Verfahren zum Zusammenbau einer Sichtkamera (10) für ein Fahrerüberwachungssystem, die folgenden Schritte umfassend:
Montieren einer gedruckten Schaltungsplatte (11) mit IR-Dioden (12) an jeder Beleuchtungsöffnung (22) einer Brücke (20) und elektrisches Verbinden der gedruckten Schaltungsplatte (11) mit IR-Dioden (12) ;
Anbringen der Brücke (20) mit der gedruckten Schaltungsplatte (11) mit IR-Dioden (12) an dem Gehäuse (13);
Einsetzen einer gedruckten Schaltungsplatte (16) für die Kamera (10) in das Gehäuse (13) und elektrisches Verbinden der gedruckten Schaltungsplatte (16) mit der Brücke (20);
Einschieben eines optischen Filters (9) in das Gehäuse (13) und Befestigen des optischen Filters (9) in dem Gehäuse (13);
Einsetzen einer ISP-Leiterplatte (17) in das Gehäuse und elektrisches Verbinden dieser mit der gedruckten Schaltungsplatte (16) für die Kamera (10) und Anbringen einer Abdeckung (14) am Gehäuse (13); und
Einsetzen einer Linse (4) in das Gehäuse (13).

13. Das Verfahren nach Anspruch 12, wobei die elektrische Verbindung der gedruckten Schaltungsplatte (11) mit IR-Dioden (12) mittels erster Kontaktierungsstifte (24) hergestellt wird.

14. Das Verfahren nach Anspruch 12, wobei die elektrische Verbindung der gedruckten Schaltungsplatte (16) für die Kamera (10) mittels zweiter Kontaktierungsstifte (26) hergestellt wird.

15. Das Verfahren nach einem der Ansprüche 12 bis 14, wobei die Brücke (20) Abschnitte (29) mit einer Greif- und Pressgeometrie zur Montage der Brücke (20) an dem Gehäuse (13) aufweist.

## Revendications

1. Une caméra de vision (10) pour un système de surveillance du conducteur (1), comprenant
un boîtier (13), et
un couvercle (14),
le boîtier (13) portant une lentille (4), une carte de circuit imprimé (11) avec des diodes IR (12) de chaque côté de la lentille (4), et une carte de circuit imprimé (16) pour la caméra (10) positionnée dans le boîtier (13),
**caractérisée par**
un pont (20) comportant une ouverture (21) pour la lentille (4) et une ouverture d'illumination (22) de chaque côté de l'ouverture (21) pour la lentille (4) ; et
une pluralité de connecteurs électriques (23) qui font partie intégrante du pont (20) et qui sont en contact électrique avec la carte de circuit imprimé (11) avec des diodes IR (12) et la carte de circuit imprimé (16) pour la caméra (10) une fois que le pont (20) est monté sur le boîtier (13).

2. La caméra de vision (10) selon la revendication 1, dans laquelle, à l'intérieur du boîtier (13), une carte de circuit imprimé ISP (17) est connectée électriquement à la carte de circuit imprimé (16) pour la caméra (10).

3. La caméra de vision (10) selon l'une quelconque des revendications précédentes, dans laquelle chacun de la pluralité de connecteurs électriques (23) du pont (20) se présente sous la forme d'un crochet comportant une première broche de contact (24) à une première extrémité libre (25) et une deuxième broche de contact (26) à une deuxième extrémité libre (27).

4. La caméra de vision (10) selon la revendication 3, dans laquelle le pont (20) comprend une matière plastique moulée par injection comportant une pluralité de connecteurs électriques (23) au moins partiellement encastrés et surmoulés, prévus à une première extrémité (41) et à une deuxième extrémité (42) du pont (20).

5. La caméra de vision (10) selon la revendication 4, dans laquelle les premières broches de contact (24) des connecteurs électriques (23), encastrées dans le pont (20), sont en contact électrique avec la carte de circuit imprimé (11) avec les diodes IR (12), et les deuxièmes broches de contact (26) des connecteurs électriques (23), encastrées dans le pont (20), sont en contact électrique avec la carte de circuit imprimé (16) pour la caméra (10).

6. La caméra de vision (10) selon l'une quelconque des revendications précédentes, dans laquelle le boîtier (13) a formé une surface d'assemblage (30) pour la lentille (4), deux géométries de refroidissement (32) situées latéralement à la surface d'assemblage (30) et au moins un élément de montage (34) pour le pont (20) situé au niveau de chaque géométrie de refroidissement (32).

7. La caméra de vision (10) selon l'une quelconque des revendications précédentes, dans laquelle des jambes individuelles (28) sont formées à une première extrémité (41) et à une deuxième extrémité (42) du pont (20), dans laquelle au moins deux des connecteurs électriques encastrés et surmoulés (23) font partie des jambes individuelles (28), et chaque géométrie de refroidissement (32) a formé une pluralité d'ailerons (33) formées sur celle-ci, dans laquelle une ouverture de montage individuelle (34) est formée entre chacune des deux ailerons successives (33) agencées pour recevoir les jambes individuelles (28) du pont (20).

8. La caméra de vision (10) selon la revendication 7, dans laquelle chacune des jambes individuelles (28) comprend une section (29) avec une géométrie de préhension et de pression qui coopère avec l'ouverture de montage (34).

9. La caméra de vision (10) selon l'une quelconque des revendications 1 à 6, dans laquelle, à une première extrémité (41) et à une deuxième extrémité (42) du pont (20), les au moins deux connecteurs électriques encastrés et surmoulés (23) forment ensemble une jambe monobloc (36), et chaque géométrie de refroidissement (32) a formé une pluralité d'ailerons (33) et une ouverture de montage allongée (38), qui est agencée pour recevoir la jambe monobloc (36) du pont (20).

10. La caméra de vision (10) selon la revendication 9, dans laquelle chaque jambe monobloc (36) comporte une section (29) avec une caractéristique d'assemblage (45) coopérant avec l'ouverture de montage (38).

11. Un agencement de caméra de vision pour un système de surveillance du conducteur (1) comprenant une caméra de vision (10) selon l'une quelconque des revendications précédentes.

12. Un procédé d'assemblage d'une caméra de vision (10) pour un système de surveillance du conducteur, comprenant les étapes consistant à :
monter une carte de circuit imprimé (11) avec des diodes IR (12) sur chaque ouverture d'illumination (22) d'un pont (20) et connecter électriquement la carte de circuit imprimé (11) avec des diodes IR (12) ;
fixer le pont (20) avec la carte de circuit imprimé (11) avec des diodes IR (12) au boîtier (13) ;
insérer une carte de circuit imprimé (16) pour la caméra (10) dans le boîtier (13) et connecter électriquement la carte de circuit imprimé (16) au pont (20) ;
glisser un filtre optique (9) dans le boîtier (13) et fixer le filtre optique (9) dans le boîtier (13) ;
placer une carte de circuit imprimé ISP (17) dans le boîtier et la connecter électriquement à la carte de circuit imprimé (16) pour la caméra (10), et fixer un couvercle (14) au boîtier (13) ; et
assembler une lentille (4) dans le boîtier (13).

13. Le procédé selon la revendication 12, dans lequel la connexion électrique de la carte de circuit imprimé (11) avec des diodes IR (12) est établie au moyen de premières broches de contact (24).

14. Le procédé selon la revendication 12, dans lequel la connexion électrique de la carte de circuit imprimé (16) pour la caméra (10) est établie au moyen de deuxièmes broches de contact (26).

15. Le procédé selon l'une quelconque des revendications 12 à 14, dans lequel le pont (20) comprend des sections (29) présentant une géométrie de préhension et de pression pour monter le pont (20) sur le boîtier (13).
